# EUROPEAN PATENT APPLICATION

(11) **EP 3 306 044 A1**
(43) Date of publication of application: **11.04.2018**
(21) Application number: 17194147.9
(22) Date of filing: 29.09.2017
(51) Int. Cl.: F01K 23/06

(54) **FAST FREQUENCY RESPONSE SYSTEMS WITH THERMAL STORAGE FOR COMBINED CYCLE POWER PLANTS**

(30) Priority: 04.10.2016 US 201615284905
(71) Applicant: General Electric Company, Schenectady, NY 12345 (US)
(72) Inventor: GUT, Jean-Marie, 5401 Baden (CH); KIRECCI, Aysegul, 5401 Baden (CH); MULLER, Peter-Paul, 5400 Baden (CH)
(74) Representative: Foster, Christopher Michael

(57) **Abstract**

This application provides a fast frequency response system for use with combined cycle power plants. Example systems may include a buffer vessel configured to store steam, a heat recovery steam generator configured to output a high pressure steam flow and a hot reheat steam flow, and a steam turbine configured to receive the high pressure steam flow and/or a reheat pressure steam flow. The buffer vessel may be configured to receive a portion of the high pressure steam flow and discharge steam.

## Description

### TECHNICAL FIELD

This application and the resultant patent relate generally to gas turbine engines and more particularly relate to a fast frequency response system for reducing a delay time in power response.

### BACKGROUND OF THE INVENTION

Generally described, a combined cycle power generation system uses a combination of a gas turbine and a steam turbine to produce electrical power or otherwise to drive a load. Specifically, a gas turbine cycle may be operatively combined with a steam turbine cycle by way of a heat recovery steam generator and the like. The heat recovery steam generator may be a multi-section heat exchanger that allows feedwater for the steam generation process to be heated by the hot combustion gases of the gas turbine exhaust. The primary efficiency of the combined cycle power plant arrangement is the utilization of the otherwise "wasted" heat of the gas turbine exhaust. Power plant operators thus aim to generate the maximum possible useful work from the heat in the gas turbine exhaust.

Power plants may experience changes in demand for power or electricity. In some instances, changes in demand may be abrupt. Power plants may therefore need to increase or decrease a production rate of the power plant. For example, power generating units may be turned on or taken offline, or power may be imported from other utilities. However, certain generating units may take time to come online, or to reach full power, and may be expensive to operate.

In addition, adjusting power generation output of an operational unit may take time, as increases in fuel, temperature, and/or pressure may be necessary. This problem results in further delay when responding to a change in demand.

A response time to changes in demand for power or electricity may therefore be important, as delayed responses could result in high costs and/or failure to supply sufficient electricity or power to satisfy a demand. In addition, a significant imbalance between electricity supply and consumption may lead to power grid instability and voltage fluctuations, which could cause grid failures. As a result, demand response times may be important so as to reduce the risk of failures and/or imbalance between supply and demand.

### SUMMARY OF THE INVENTION

This application and the resultant patent provide a fast frequency response system for use with a combined cycle power plant. The fast frequency response system may include a buffer vessel configured to store steam and/or thermal energy, a heat recovery steam generator configured to output a high pressure steam flow and a hot reheat steam flow, and a steam turbine configured to receive the high pressure steam flow. In some embodiments, the steam turbine may be configured to receive the hot reheat pressure steam flow. The buffer vessel may be configured to receive a portion of the high pressure steam flow and discharge steam.

This application and the resultant patent further provide a method of operating a fast frequency response system with a combined cycle power plant. The method may include the steps of charging a buffer vessel with steam and/or thermal energy, storing the steam and/or thermal energy in the buffer vessel, determining that a fast frequency response event has occurred, and discharging steam from the buffer vessel.

This application and the resultant patent further provide a fast frequency response system for use with a heat recovery steam generator. The fast frequency response system may include a buffer vessel configured to store steam and/or thermal energy, a heat recovery steam generator configured to output a high pressure steam flow and a hot reheat steam flow, a first control valve configured to regulate a flow of the high pressure steam flow into the buffer vessel, a second control valve configured to regulate a flow of steam out of the buffer vessel and into the hot reheat steam flow, and a steam turbine configured to receive the high pressure steam flow. In some embodiments, the steam turbine may be configured to receive the hot reheat pressure steam flow.

These and other features and improvements of this application and the resultant patent will become apparent to one of ordinary skill in the art upon review of the following detailed description when taken in conjunction with the several drawings and the appended claims.

### BRIEF DESCRIPTION OF THE DRAWINGS

Fig. 1 is a schematic diagram of a known combined cycle power plant with a gas turbine, a steam turbine, and a heat recovery steam generator.
Fig. 2 is a schematic diagram of a fast frequency response system for use with a combined cycle power plant as may be described herein.
Fig. 3 is an example process flow for operating a fast frequency response system as may be described herein.
Fig. 4 is another example process flow for operating a fast frequency response system as may be described herein.

### DETAILED DESCRIPTION

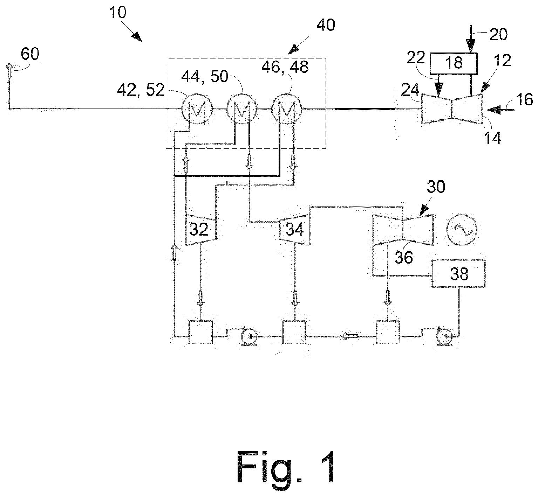

Referring now to the drawings, in which like numerals refer to like elements throughout the several views, Fig. 1 shows a schematic diagram of a combined cycle power plant 10. The combined cycle power plant 10 may include a gas turbine engine 12. The gas turbine engine 12 may include a compressor 14. The compressor 14 compresses an incoming flow of air 16. The compressor 14 delivers the compressed flow of air 16 to a combustor 18. The combustor 18 mixes the compressed flow of air 16 with a pressurized flow of fuel 20 and ignites the mixture to create a flow of combustion gases 22. Although only a single combustor 18 is shown, the gas turbine engine 12 may include any number of combustors 18. The flow of combustion gases 22 is in turn delivered to a turbine 24. The flow of combustion gases 22 drives the turbine 24 so as to produce mechanical work. The mechanical work produced in the turbine 24 drives the compressor 14 via a shaft and an external load 60 such as an electrical generator and the like. The gas turbine engine 12 may use natural gas, various types of syngas, liquid fuels, and/or other types of fuels and blends thereof. The gas turbine engine 12 may have different configurations and may use other types of components. Other types of gas turbine engines also may be used herein. Multiple gas turbine engines, other types of turbines, and other types of power generation equipment also may be used herein together.

The combined cycle power plant 10 also includes a steam turbine 30. The steam turbine 30 may include a number of sections with multiple steam admission points at different pressures. Specifically, the steam turbine 30 may include a high pressure steam section 32, an intermediate pressure steam section 34, and a low pressure steam section 36. The low pressure steam section 36 may exhaust into a condenser 38. The steam turbine 30 may drive the same load 60 or a different load as the gas turbine 12. The steam turbine 30 may be a component of any water steam cycle configuration, which can include any number of feedwater extractions and/or a number of feedwater heaters. Other configurations and other components also may be used herein.

The combined cycle power plant 10 may include a heat recovery steam generator 40. The heat recovery steam generator 40 also may include a number of steam sections such as a low pressure section 42, an intermediate pressure section 44, and a high pressure section 46. Each section 42, 44, 46 may include one or more drums, economizers, evaporators, superheaters, and/or additional components. In this example, and in addition to other components, the high pressure section 46 may include a source of high pressure steam such as a high pressure evaporator 48, the intermediate pressure section 44 may include a reheater 50, and the low pressure section 42 may include a source of low pressure steam such as a low pressure evaporator 52. Other components and other configurations may be used herein.

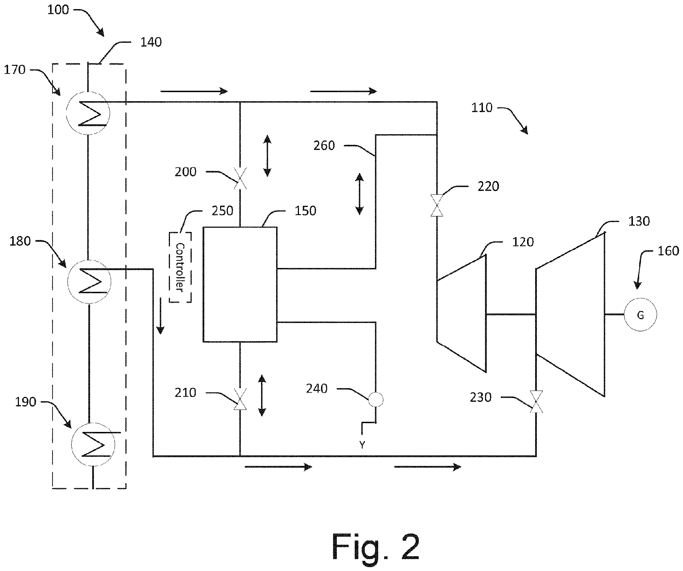

Fig. 2 shows a fast frequency response system 100 for use with a combined cycle power plant as may be described herein. The combined cycle power plant may include a gas turbine engine, a steam turbine, and a heat recovery steam generator that may be substantially similar to those described above. In this example, the combined cycle power plant may include a steam turbine 110 with a high pressure steam turbine 120, an optional intermediate pressure steam turbine or an optional combined intermediate/low pressure steam turbine 130, a heat recovery steam generator 140, and a buffer vessel 150. The steam turbine 110 may be any suitable turbine(s), such as condensing turbines, backpressure turbines, extraction-condensing turbines and extraction-backpressure turbines, and the like. The heat recovery steam generator 140 may be any suitable steam generator and may receive hot gas from a gas turbine. The heat recovery steam generator 140 may generate steam and may drive the high pressure steam turbine 120 and/or the intermediate/low pressure steam turbine 130. The high pressure steam turbine 120 and the intermediate/low pressure steam turbine 130 may drive a generator 160 or another load to generate power. The generator 160 or the load may be the same load driven by a gas turbine of the combined cycle power plant 110, or a different load.

The heat recovery steam generator 140 may include one or more sections. For example, the heat recovery steam generator 140 may include a high pressure section 170, an intermediate pressure section 180, and a low pressure section 190. Each individual section 170, 180, 190 may have any number of heat exchange elements therein. Output from the high pressure section 170 may be directed to the high pressure steam turbine 120. A high pressure steam control valve 220 may be used to regulate flow from the high pressure section 170 to the high pressure steam turbine 120. The intermediate pressure section 180 may receive a flow of steam exhausted from the high pressure steam turbine 120. Output from the intermediate pressure section 180 may be directed to the intermediate/low pressure steam turbine 130. For example, a flow of hot reheat steam may be directed from the intermediate pressure section 180 to the intermediate/low pressure steam turbine 130. An intermediate pressure steam control valve 230 may be used to regulate flow from the intermediate pressure section 180 to the intermediate/low pressure steam turbine 130. The heat recovery steam generator 140 may therefore work in conjunction with the steam turbine 110 and a gas turbine to drive the generator 160 or another load. Other configurations and components may be used.

The fast frequency response system 100 may include the buffer vessel 150. The buffer vessel 150 may be a thermal storage vessel and may store steam and/or thermal energy. In some embodiments, more than one buffer vessel or other thermal storage vessel may be included. The buffer vessel 150 may be any suitable vessel configured to store or otherwise hold thermal energy. One or more sensors may be used to determine pressure levels of steam or fluid in the buffer vessel 150.

The buffer vessel 150 may be charged via operation of one or more control valves. For example, a first control valve 200 may govern or control the flow of steam into or out of the buffer vessel 150. In one embodiment, the first control valve 200 may control flow of a portion of high pressure steam flow into the buffer vessel 150. The first control valve 200 may be any suitable control valve and may be opened, closed, partially opened, or partially closed. In some embodiments, control valves may be installed at each inlet or outlet of the buffer vessel 150.

The buffer vessel 150 may discharge steam that is stored in the buffer vessel (resulting in discharge of thermal energy) into any appropriate steam system, such as into a high pressure flow from the heat recovery steam generator 140, a hot reheat flow from the heat recovery steam generator, or another suitable flow. A second control valve 210 may govern or control the flow of steam into or out of the buffer vessel 150. In one embodiment, the second control valve 210 may control flow or discharge of the stored steam from the buffer vessel 150 into a hot reheat steam flow from the heat recovery steam generator 150. The second control valve 210 may be any suitable control valve and may be opened, closed, partially opened, or partially closed.

The buffer vessel 150 may receive steam from any suitable component in the combined cycle power plant, such as from any section of the heat recovery steam generator 140. The buffer vessel 150 may receive steam from the high pressure section 170 and feed it back to the high pressure section 170. The buffer vessel 150 may receive steam from the reheat pressure section 180 and feed it back to the reheat pressure section 180. The buffer vessel 150 may receive steam from the high pressure section 170 and feed it to the reheat pressure section 180.

The buffer vessel 150 may be charged or otherwise filled with steam in multiple ways, which may be dependent on positioning of the buffer vessel 150 within a particular combined cycle power plant. For example, the buffer vessel 150 may be charged from or by a high pressure output from the heat recovery steam generator 140. In such instances, the buffer vessel 150 may receive a portion of the output of the high pressure section 170 of the heat recovery steam generator 140. Once charged or filled with steam that substantially matches a pressure level of the output of the high pressure section 170, the thermal energy stored in the buffer vessel 150 may be discharged into a hot reheat steam flow, or an intermediate pressure flow of, for example, output from the intermediate pressure section 180 of the heat recovery steam generator 140. The thermal energy stored in the buffer vessel 150 may also be discharged into a low pressure flow of, for example, output from the low pressure section 190 of the heat recovery steam generator 140. In some embodiments, the thermal energy stored in the buffer vessel 150 may be discharged into a combined intermediate/low pressure flow of, for example, output from both the intermediate pressure section 180 and the low pressure section 190 of the heat recovery steam generator 140.

In another embodiment, the buffer vessel 150 may be charged from or by a high pressure output from the heat recovery steam generator 140 while the heat recovery steam generator 140 and/or the combined cycle power plant is at a full load. In such instances, the buffer vessel 150 may receive a portion of the output of the high pressure section 170 of the heat recovery steam generator 140 while the system is at full load. Once charged or filled with steam that substantially matches a pressure level of the output of the high pressure section 170 at full load, the thermal energy stored in the buffer vessel 150 may be discharged into a high pressure flow of, for example, output from the high pressure section 170 of the heat recovery steam generator 140 at partial load. As a result, power output may be increased quickly, and the steam in the buffer vessel 150 may be at a higher pressure level than the output of the high pressure section 170 at partial load. In other embodiments, thermal energy stored in the buffer vessel 150 may be discharged into intermediate and/or low pressure flows from the heat recovery steam generator 140. By opening steam turbine valves in a controlled manner, the stored energy in the buffer vessel can be released and converted rapidly in the steam turbine to boost the energy output of the steam turbine.

In another embodiment, the buffer vessel 150 may be charged from or by intermediate pressure and/or low pressure flow output from the intermediate pressure section 180 and/or the low pressure section 190 of the heat recovery steam generator 140 while the heat recovery steam generator 140 and/or the combined cycle power plant is at a full load. In such instances, the buffer vessel 150 may receive a portion of the output of either, or a combined output from both, the intermediate pressure section 180 and/or the low pressure section 190 of the heat recovery steam generator 140 while the system is at full load. Once charged or filled with steam that substantially matches a pressure level of the output of the intermediate pressure section 180 and/or the low pressure section 190 at full load, the thermal energy stored in the buffer vessel 150 may be discharged into an intermediate pressure flow, or a combined intermediate/low pressure flow, of output from the intermediate pressure section 180 and/or the low pressure section 190 of the heat recovery steam generator 140 at partial load. As a result, power output may be increased quickly, and the steam in the buffer vessel 150 may be at a higher pressure level than the output of the intermediate pressure section 180 and/or the low pressure section 190 at partial load. In other embodiments, thermal energy stored in the buffer vessel 150 may be discharged into high pressure flow from the heat recovery steam generator 140.

The buffer vessel 150 may be kept at appropriate temperatures and pressures via a number of methods. For example, a warm keeping line 260 may be included to redirect a portion of high pressure steam from the heat recovery steam generator 140 to the buffer vessel 150, so as to maintain a temperature and/or pressure of the steam stored in the buffer vessel 150. The warm keeping line 260 may be configured to maintain a pressure of the steam stored in the buffer vessel 150. The warm keeping line 260 may be in communication with the buffer vessel 150 and the high pressure steam flow from the heat recovery steam generator 140.

In some embodiments, a drainage device 240, such as a condensing or draining device, may be in fluid communication with the buffer vessel 150 and may be configured to drain the buffer vessel 150 into, for example, the atmosphere. The drainage device 240 may be a fluid level regulation device configured to regulate a fluid level of condensate in the buffer vessel 150. The drainage device 240 may drain condensate from the buffer vessel 150.

One or more aspects of the fast frequency response system 100 and the combined cycle power plant may be controlled by a controller 250. For example, the controller 250 may be configured to regulate operation of the first control valve 200 and the second control valve 210. The controller 250 may be configured to charge the buffer vessel 150 by opening the first control valve 200 and closing the second control valve 210, or vice versa. The controller 250 may be configured to close the first control valve 200 and to regulate discharge of the steam stored in the buffer vessel 150 via operation of the second control valve 210. The controller may be any type of programmable logic device, such as a microcomputer and the like.

During example operation of the fast frequency response system 100 of Fig. 2, the combined cycle power plant may be operating at steady state. The buffer vessel 150 may be supplied with high pressure steam from the high pressure section 170. For example, the first control valve 200 may be opened, and a portion of the high pressure steam from the high pressure section 170 may be directed into the buffer vessel 150. The second control valve 210 may remain closed while the buffer vessel 150 receives the high pressure steam. The buffer vessel 150 may be filled, and the first control valve 200 may remain opened until a pressure level inside the buffer vessel 150 is equal to, or substantially equal to, the highest attained steam pressure level output from the high pressure section 170 during normal load operation. When the buffer vessel 150 has stored steam or thermal energy that is equal to, or substantially equal to, the highest steam pressure level output from the high pressure section 170, the first control valve 200 may be closed. In other embodiments, the first control valve 200 may be automatically closed as soon as a reduction in load is sensed, or a reduction in power output of the power plant is sensed. If a pressure level of the steam output from the high pressure section 170 is determined to be greater than a pressure level of stored steam in the buffer vessel 150, the first control valve 200 may be opened to allow the higher pressure steam to flow into the buffer vessel 150.

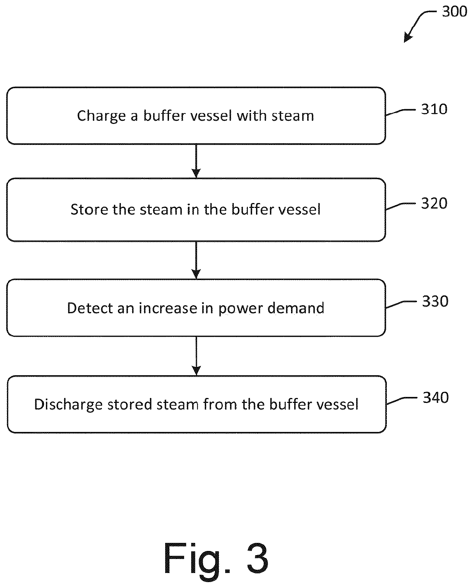

Fig. 3 shows an example process flow 300 for operating a fast frequency response system. At a first operation 310, a buffer vessel is charged with steam and/or thermal energy. For example, the buffer vessel may receive high pressure steam from a heat recovery steam generator. At a second operation 320, the steam and/or thermal energy may be stored in the buffer vessel. For example, control valves may be operated to store the steam and/or thermal energy in the buffer vessel. At a third operation 330, an increase in power demand is detected. For example, a fast frequency response or support event, or an event indicating an unexpected change in power demand, may be detected. At a fourth operation 340, the steam stored in the buffer vessel is discharged from the buffer vessel. For example, the buffer vessel may be discharged in a controlled manner into a hot reheat steam flow, or a high pressure steam flow, or another suitable flow. The freshly discharged steam or flow of energy can be converted in the appropriate steam turbine. Response to the fast frequency support event can be achieved with little delay, such as in about 0.05 seconds.

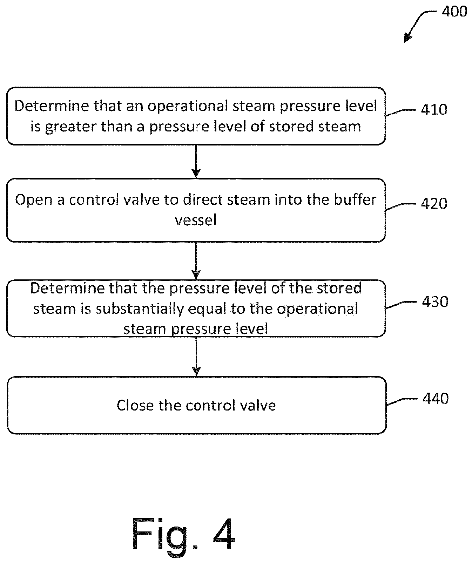

Fig. 4 shows an example process flow 400 for operating a fast frequency response system. At a first operation 410, a controller may be configured to determine that an operational steam pressure level is greater than a pressure level of steam in the buffer vessel. For example, the controller may be configured to determine that a high pressure steam flow is at a higher or greater pressure than a pressure level of steam in a buffer vessel. At a second operation 420, the controller may cause a control valve to open to direct steam into the buffer vessel. At a third operation 430, the controller may be configured to determine that the pressure level of the steam in the buffer vessel is substantially equal to the operational steam pressure level, or the pressure level of the high pressure steam flow. At a fourth operation 440, the controller may cause the control valve to close.

Integration of thermal storage vessels into a water steam cycle, and into the power control of a combined cycle power plant may result in reduced response times to changes in power grid requirements. Certain embodiments may improve storage capacity of a steam system and increase steam turbine power independent of output from a gas turbine. Delay time of the combined cycle power plant, and of the steam turbine in particular, may be reduced. In some embodiments, initial delay time of the combined cycle power plant may be reduced to about 0.05 seconds or less. Reliance on gas turbines for fast response may be reduced.

It should be apparent that the foregoing relates only to certain embodiments of this application and resultant patent. Numerous changes and modifications may be made herein by one of ordinary skill in the art without departing from the general spirit and scope of the invention as defined by the following claims and the equivalents thereof.

## Claims

1. A fast frequency response system for use with a power plant, comprising:
a buffer vessel configured to store steam;
a heat recovery steam generator configured to output a high pressure steam flow; and
a steam turbine configured to receive the high pressure steam flow;
wherein the buffer vessel is configured to receive a portion of the high pressure steam flow and discharge steam.

2. The fast frequency response system of claim 1, further comprising an intermediate pressure turbine configured to receive a hot reheat steam flow from the heat recovery steam generator.

3. The fast frequency response system of claim 2, wherein the intermediate pressure turbine comprises an intermediate/low pressure turbine that is mechanically coupled to the steam turbine.

4. The fast frequency response system of any one of claims 1 to 3, further comprising:
a warm keeping line configured to maintain a pressure of the steam stored in the buffer vessel.

5. The fast frequency response system of claim 4, wherein the warm keeping line is in communication with the buffer vessel and the high pressure steam flow.

6. The fast frequency response system of any one of claims 1 to 5, wherein the buffer vessel is configured to discharge steam into a hot reheat steam flow from the heat recovery steam generator.

7. The fast frequency response system of any one of claims 1 to 6, further comprising:
a fluid level regulation device configured to regulate a fluid level of condensate in the buffer vessel.

8. The fast frequency response system of any one of claims 1 to 7, further comprising:
a first control valve that controls flow of the portion of the high pressure steam flow into the buffer vessel; and
a second control valve that controls discharge of the steam from the buffer vessel.

9. The fast frequency response system of claim 8, further comprising a controller configured to regulate operation of the first control valve and the second control valve.

10. The fast frequency response system of claim 9, wherein the controller is configured to close the first control valve and to regulate discharge of the steam via operation of the second control valve.

11. The fast frequency response system of claim 9 or 10, wherein the controller is configured to charge the buffer vessel by opening the first control valve and closing the second control valve.

12. The fast frequency response system of any one of claims 9 to 11, wherein the controller is configured to determine that the high pressure steam flow is at a higher pressure than a pressure of the steam in the buffer vessel.

13. The fast frequency response system of claim 12, wherein the controller is configured to open the first control valve until the pressure of the steam in the buffer vessel is substantially equal to the pressure of the high pressure steam flow.

14. The fast frequency response system of any one of claims 1 to 13, wherein the fast frequency response system is configured to respond to a fast frequency support event in about 0.05 seconds.
